# EUROPEAN PATENT SPECIFICATION

(11) **EP 3 015 327 B1**
(45) Date of publication and mention of the grant of the patent: **12.04.2017**
(21) Application number: 14382421.7
(22) Date of filing: 28.10.2014
(51) Int. Cl.: B60T 11/18, F16C 11/10

(54) **Fixing device for fixing an actuator element to a pedal for a motor vehicle, and pedal incorporating said device**
Kupplung zwischen Aktuatorelement und Pedal für ein Kraftfahrzeug, und Pedal mit so einer Kupplung
Dispositif de fixation d'un élément de actuation à un pèdale de véhicule, et pèdale avec un tel dispositif de fixation

(43) Date of publication of application: 04.05.2016
(73) Proprietor: Batz, S.Coop., 48140 Igorre (ES)
(72) Inventor: Aguirre Pichel, Iñaki, 48980 Santurtzi (ES); Arrilaga Elcoro, Peru, 48280 Lekeitio (ES)
(74) Representative: Igartua, Ismael

(56) References cited:
- EP-A1- 1 431 596
- EP-A2- 1 850 017
- DE-A1-102008 063 752
- FR-A1- 2 828 533
- FR-A1- 2 842 318
- US-A- 5 163 773
- US-A- 5 934 151

## Description

### TECHNICAL FIELD

The present invention relates to fixing devices for fixing an actuator element to a pedal adapted to a motor vehicle, and to pedals incorporating said devices.

### PRIOR ART

Fixing devices for fixing an actuator element to a pedal adapted to a motor vehicle are known, comprising a lever rotating about an axis, an actuator element, such as an actuation rod, for example, that operates an actuator (for example, a servo brake or clutch cylinder), when a user applies a force on said pedal housing one end of said actuator element therein. These fixing devices comprise connection means fixed to the lever of the pedal, and comprise retaining means for retaining the end of the actuator element. These retaining means allow retaining the end of the actuator element in the fixing device when force is applied to the pedal that tends to disengage the fixing of the actuator element with the pedal.

EP1850017 A2 describes a fixing device for fixing an actuator element to a pedal adapted to a motor vehicle. The pedal comprises a lever with an axis of rotation, and the actuator element comprises an end. The actuator element transmits an actuation force applied on the lever by a user to an actuator. The fixing device comprises a housing fixed to the lever and a connector. The connector comprises retaining means retaining the end of the actuator element in a locking position, in a space formed between the inside of the connector and the housing.

### DISCLOSURE OF THE INVENTION

The object of the invention is to provide a fixing device for fixing an actuator element to a pedal adapted to a motor vehicle, and a pedal comprising the fixing device, as defined in the claims.

The pedal comprises a lever with an axis of rotation, and the actuator element comprises an end. The actuator element transmits an actuation force applied on the lever by a user to an actuator. The fixing device of the invention comprises a housing fixed to the lever and a connector. The connector comprises retaining means retaining the end of the actuator element in a locking position, in a space formed between the inside of the connector and the housing. The connector also comprises pressure means interfering with the space formed between the inside of the connector and the housing, pressing the end of the actuator element in the locking position, and assuring permanent and rigid transmission of the actuation force between the end of the actuator element and the lever.

The fixing device described in EP1850017 A2 comprises elastic means arranged in the connector which tend to move said connector out of its fixing to the lever of the pedal, and the object thereof is to assure a play-free fit of the connector in the fixing thereof in the pedal. The noises and tapping sounds that can be generated in the attachment between the connector and the lever of the pedal are therefore eliminated. However, and due to manufacturing tolerances of the components comprised in the fixing device, there may be excessive play on one hand between the end of the actuator element and the retaining means, and on the other hand between the end of the actuator element and the lever of the pedal. This involves the so-called dead travel effect, in addition to noises and tapping sounds every time the pedal is actuated by the user or those that are transmitted by the engine of the vehicle. The dead travel effect occurs when, upon a user applying a force F on the lever of the pedal, the transmission of said force to the actuator element is not immediate, but rather a certain time elapses and a gap is formed due to the play between the parts forming the fixing device, until said force is transmitted to the actuator element.

In the fixing device of the invention, the connector comprises pressure means interfering with the space formed between the inside of the connector and the housing, and said pressure means therefore press and push the end of the actuator element when it is in the locking position. The pressure means thus assure permanent and rigid contact between the end of the actuator element and the lever of the pedal, such that there is no play between the lever of the pedal and the actuator element attached to the actuator, possible noises and tapping sounds therefore being eliminated. Furthermore, when the user applies force on the lever of the pedal, the transmission of said force to the actuator element is immediate, and no gap is formed due to play between the parts, so the dead travel effect is eliminated.

These and other advantages and features of the invention will become evident in view of the drawings and the detailed description of the invention.

### DESCRIPTION OF THE DRAWINGS

Figure 1 shows a side perspective view of a pedal with an actuator element and an embodiment of the fixing device of the invention dismounted.
Figure 2 shows a bottom perspective view of the pedal of Figure 1, with the fixing device and the actuator element mounted on the pedal.
Figure 3a shows a side perspective view of the connector of the fixing device of Figure 1.
Figure 3b shows a bottom perspective view of the connector of Figure 1.
Figure 4a shows a plan view of the connector of Figure 1.
Figure 4b shows a section view according to line IVb-IVb of Figure 4a.
Figure 4c shows a section view according to line IVc-IVc of Figure 4a.
Figure 5a shows a plan view of the connector of Figure 1 with the casing mounted.
Figure 5b shows a section view according to line Vb-Vb of Figure 5a.
Figure 5c shows a section view according to line Vc-Vc of Figure 5a.
Figure 6a shows a front view of the connector and the actuator element of Figure 1 mounted in the housing of the pedal.
Figure 6b shows a partial section view according to line VIb-VIb of Figure 6a, of the connector, the actuator element, and the casing mounted in the housing of the pedal.
Figure 7a shows a plan view of the connector and the actuator element of Figure 1 mounted in the housing of the pedal.
Figure 7b shows a partial section view according to line VIb-VIb of Figure 7b, of the connector, the actuator element, and the casing mounted in the housing of the pedal.

### DETAILED DISCLOSURE OF THE INVENTION

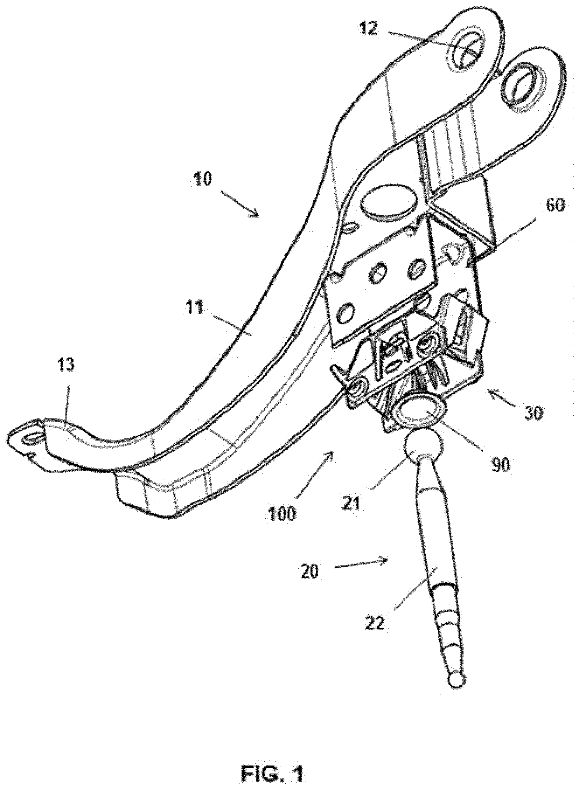

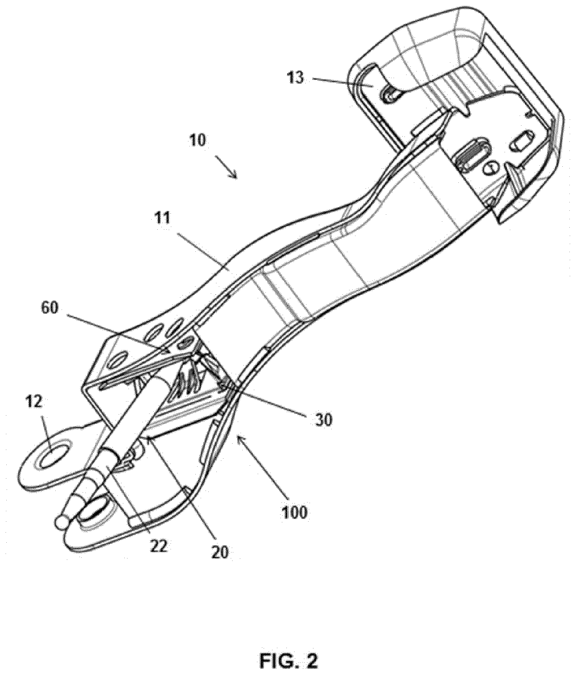

Figure 1 shows a side perspective view of a pedal 10 for motor vehicles, specifically a brake pedal, comprising a lever 11 with an axis of rotation 12, which allows pivoting the lever 11 when a user applies a braking force on one end 13 where a shoe is mounted. Figure 1 also shows an actuator element 20 and an embodiment of a fixing device 100 of the invention dismounted from the pedal 10. In this embodiment, the fixing device 100 comprises a connector 30, a casing 90, and a housing 60 where the connector 30 is housed when the fixing device 100 is mounted on the pedal 10. In the embodiment of the fixing device 100 shown, the housing 60 is a metallic part welded to the lever 11 of the pedal 10, although it could also be fixed to the pedal 10 with other means. In other embodiments (not shown in the drawings), the housing 60 is part of the pedal 10 itself, being obtained during the transformation of said pedal 10. Figure 2 shows a bottom perspective view of the pedal 10 of Figure 1, with the fixing device 100 mounted on the pedal 10.

The fixing device 100 allows coupling the actuator element 20 to the pedal 10. In this embodiment, the actuator element 20 is an actuator rod comprising a rod-shaped body 22, with one end attached to an actuator (not shown in the drawings) and the other end 21 attached to the fixing device 100 when the pedal 10 is mounted on the actuator, the end 21 being a sphere in this embodiment. The actuator element 20 allows transmitting the actuation force applied by the user on the end 13 of the lever 11 to the actuator.

The connector 30 comprises retaining means 40 retaining the end 21 of the actuator element 20 in a locking position. In other words, when the actuator element 20 is fixed to the pedal 10 by means of the fixing device 100, the end 21 is introduced in a space 36 formed between the inside of the connector 30 and the housing 60, this space 36 of the fixing device 100 being substantially spherical in this embodiment. The end 21 cannot come out of said space 36 when the actuator element 20 is subjected to forces that tend to disengage the fixing of the actuator element 20 with the pedal 10.

The connector 30 also comprises pressure means 50 interfering with the gap 36. So when the end 21 of the actuator element 20 is in the locking position, since the pressure means 50 tend to occupy the space 36 occupied by the end 21, they press the spherical surface of the end 21, pushing said end 21 and therefore pushing the actuator element 20, assuring permanent and rigid transmission of the actuation force between the end 21 of the actuator element 20 and the lever 11 of the pedal 10.

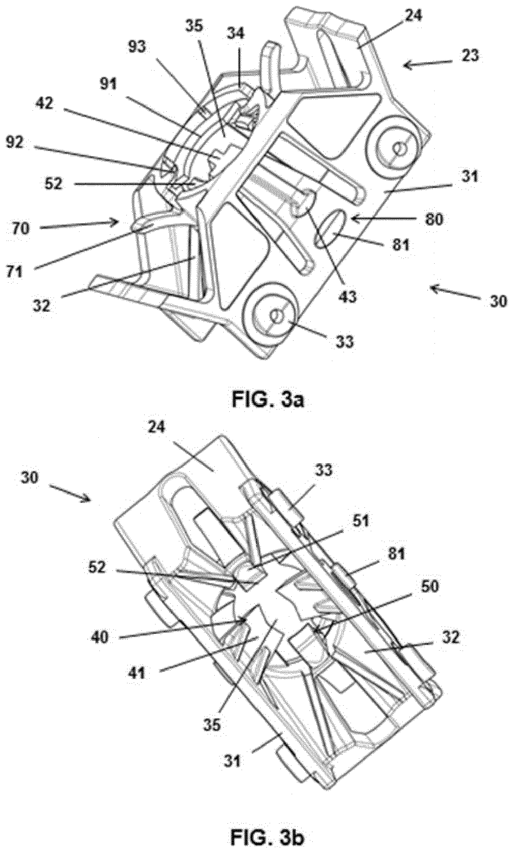

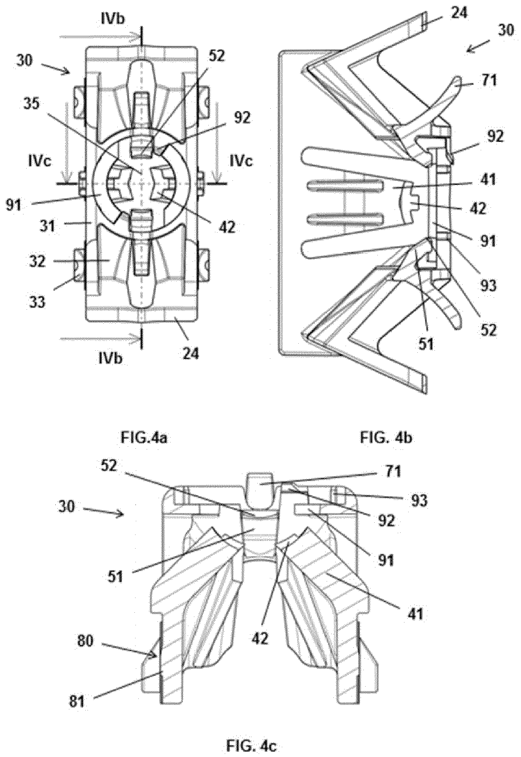

Figure 3a shows a side perspective view of the connector 30 of the fixing device 100 of Figure 1, and Figure 3b shows a bottom perspective view of the connector 30 of Figure 1. Figure 4a shows a plan view of the connector 30 of Figure 1, Figure 4b shows a section view according to line IVb-IVb of Figure 4a, and Figure 4c shows a section view according to line IVc-IVc of Figure 4a.

The connector 30 of the embodiment of the fixing device 100 shown is formed by a single part and is made integrally of plastic, this plastic preferably being POM, although it could be made of other composites or other materials. Said connector 30 is substantially parallelepiped-shaped, representing a case, with two side retaining walls 31 substantially parallel to one another, comprising the retaining means 40. In this embodiment, these retaining means 40 comprise two retaining arms 41 projecting obliquely from each retaining wall 31 towards the inside of the connector 30, approximately in the middle of said retaining walls 31, at a certain angle in the direction for insertion of the connector 30 in the housing 60 in the lever 11. Said angle of inclination of the retaining arms 41 allows retaining the end 21 of the actuator element 20 in the space 36 of the connector 30 when said end 21 is in the locking position. Each retaining arm 41 comprises a retaining end 42 at the free end, such that if there is a requirement of the actuator element 20 that tends to disengage it from the connector 30, the retaining ends 42 contact with the free end 21, preventing it from coming out of the space 36 of the connector 30.

The connector 30 also comprises two pressure walls 32, each pressure wall 32 being opposite each of the retaining walls 31, forming the side structure of the connector 30. In this embodiment of the fixing device 100, the pressure means 50 comprise two pressure arms 51 each projecting from each pressure wall 32 towards the inside of the connector 30 at a certain angle in the direction for insertion of the connector 30 in the housing 60 in the lever 11. Each pressure arm 51 comprises a pressure end 52 at a free end. When the end 21 of the actuator element 20 is located in the locking position after having been introduced in the space 36 formed between the inside of the connector 30 and the housing 60 in the lever 11, the sphere forming said end 21 in this embodiment of the actuator element 20 surpasses the position of the two retaining ends 42 of the retaining arms 41, and at least half the height of the end 21, i.e., more than the radius of the sphere, surpasses the position of the pressure ends 52 of the pressure arms 51, in the direction for insertion of the connector 30 in the housing 60.

To enable introducing the end 21 of the actuator element in the space 36 of the connector 30 in the locking position, the retaining arms 41 of the retaining means 40 are more rigid than the pressure arms 51 of the pressure means 50. Therefore, though more rigid, the retaining arms 41 are flexible enough to give way for the passage of the end 21 when it moves to the locking position, but rigid enough to prevent the end 21 from coming out when exposed to force requirements that tend to disengage the actuator element 20 from the connector 30. Said retaining arms 41 therefore assure maximum mounting force, i.e., enough flexibility in mounting, and assure a minimum force in dismounting the actuator element 20, i.e., rigid enough in dismounting to assure the attachment between the pedal 10 and the actuator element 20, preventing the user from being able to accidentally pull them apart by applying upward force on the pedal 10.

In contrast, the pressure arms 51 are more flexible than the retaining arms 41 because they have to give way for the passage of the end 21 in its position, but they have to be rigid enough to remain attached to the surface of said end 21 and push said end 21 in the direction for the entry of the actuator element 20 in the connector 30, maintaining constant contact of the end 21 with the housing 60. This difference in rigidity of the retaining arms 41 and pressure arms 51 is achieved by design, combining in each case different thicknesses, geometries and angles of forces of the arms.

In this embodiment, the connector 30 comprises in each of the retaining walls 31 two fixing projections 33, arranged towards the outside at the base of each of said retaining walls 31, from where the retaining arms 41 come out. These retaining projections 33 protrude more in the lower portion thereof than in the upper portion, and each projection 33 is arranged on one side of the retaining arms 41 and is coupled in retaining orifices 62 of the housing 60 which are arranged in two side walls 61 when the connector 30 is housed in the housing 60, the side walls 61 being substantially parallel to one another and to the retaining walls 31. In this embodiment, the connector 30 also comprises a longitudinal play remover 70, said longitudinal play remover 70 comprising two elastic arms 71 in this embodiment. Each elastic arm 71 projects from each of the pressure walls 32 towards the outside of the connector 30 in the direction for insertion of the connector 30 in the housing 60, each elastic arm 71 interfering with an upper wall 63 of the housing 60 in contact with the lever 11 of the pedal 10 when the connector 30 is housed in the housing 60, pushing each elastic arm 71 of the upper wall 63 of the housing 60, therefore pushing the connector 30 in the direction opposite its direction for insertion in the housing 60, and fitting the fixing projections 33 in the orifices 62 of the housing 60 withoutplay. Therefore while there are vibrations transmitted to the fixing device 100 due to the state of the road on which the vehicle is travelling, or due to the vehicle engine, these vibrations do not generate noises because there is no play between the connector 30 and the housing 60 in the direction for insertion of said connector 30 in said housing 60.

In this embodiment, the connector 30 also comprises a lateral play remover 80 comprising a projection 81 arranged projecting towards the outside in the base of each of the retaining walls 31. These projections 81 are protuberances which are each arranged between the retaining projections 33 of each retaining wall 31 and are supported against the side walls 61 of the housing 60, interfering with said side walls 61 when the connector 30 is housed in the housing 60, each projection 81 of each side wall 61 pushing laterally. So while there are vibrations transmitted to the fixing device 100, these vibrations do not generate noises because there is no lateral play between the connector 30 and the housing 60.

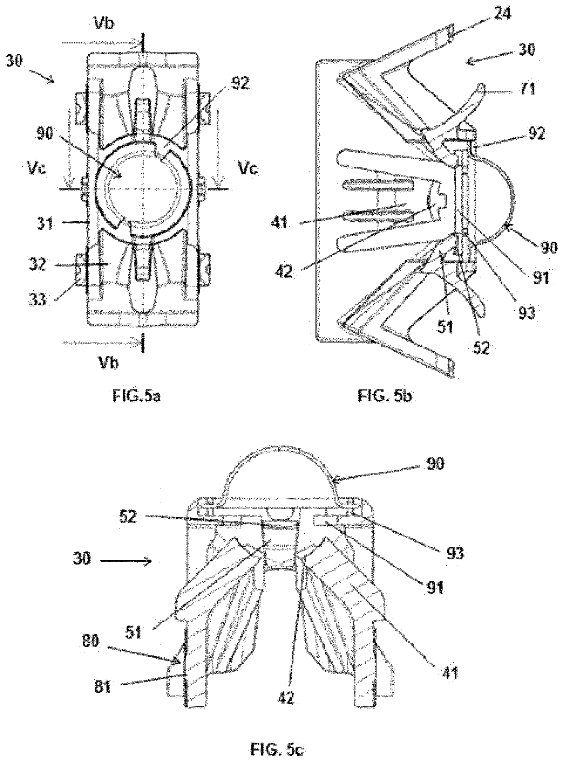

Figure 5a shows a plan view of the connector 30 of Figure 1 with the casing 90 mounted, Figure 5b shows a section view according to line Vb-Vb of Figure 5a, and Figure 5c shows a section view according to line Vc-Vc of Figure 5a.

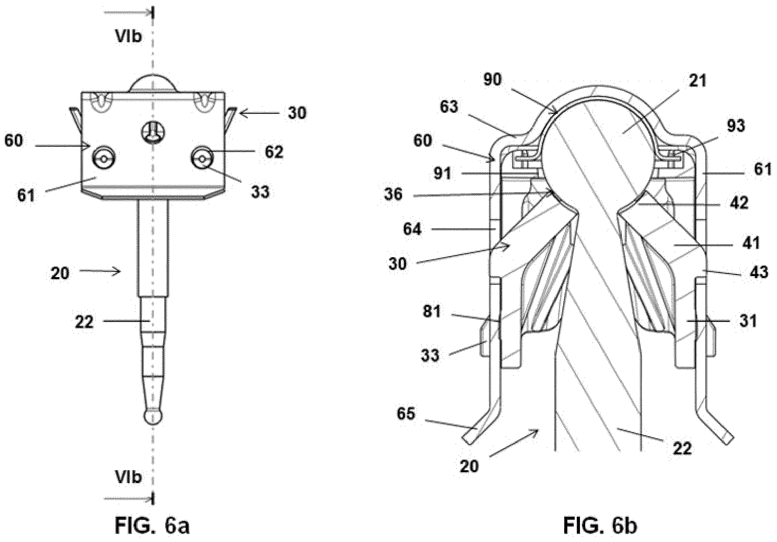

Figure 6a shows a front view of the connector 30 and the actuator element 20 of Figure 1 mounted in the housing 60 of the pedal 10, and Figure 6b shows a partial section view according to line Vlb-Vlb of Figure 6a of the connector 30, the actuator element 20, and the casing 90 mounted in the housing 60 of the pedal 10.

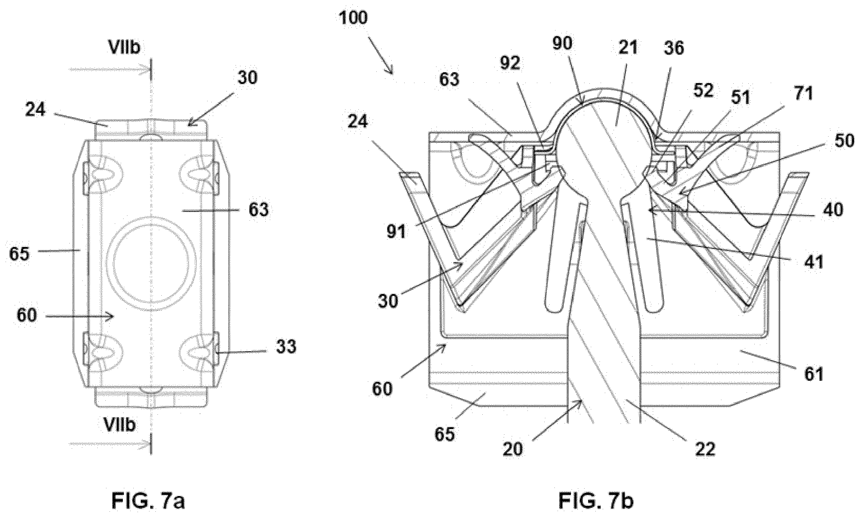

Figure 7a shows a plan view of the connector 30 and the actuator element 20 of Figure 1 mounted in the housing 60 of the pedal 10, and Figure 7b shows a partial section view according to line VIIb-VIIb of Figure 7a of the connector 30, the actuator element 20, and the casing 90 mounted in the housing 60 of the pedal 10. Said Figure 7b shows the pressure ends 52 of the pressure arms 51 in a rest position in order to illustrate how they interfere with the space 36 in which the end 21 of the actuator 20 is retained in the locking position. Therefore, when the end 21 of the actuator is housed in the space 36, said pressure ends 52 press against the surface of said end 21. Likewise, Figure 7b shows the elastic arms 71 of the longitudinal play remover 70 in a rest position in order to illustrate how they interfere with the upper wall 63 of the housing 60. So when the connector 30 is housed in the housing 60, the elastic arms 71 press against the upper wall 63 of said housing 60.

The retaining arms 41 comprise on their outer face, at the end coming out of each retaining wall 31 towards the inside of the connector 30, a retaining projection 43 which is a protuberance arranged between the retaining projections 33 of each retaining wall 31 and above the projection 81 in the direction for insertion of the connector 30 in the housing 60. Each of the side walls 61 of the housing 60 comprises an orifice 64 arranged between the retaining orifices 62 of the side walls 61, the retaining projections 43 being suitable for being coupled in the orifices 64 when the retaining arms 41 open. In a situation in which the end 21 of the actuator element 20 is in the locking position, the retaining projections 43 are not coupled in the orifices 64, but if an action for opening the retaining arms 41 takes place, for example when an upward force is applied on the pedal 10, and the end 21 of the actuator element 20 tends to come out of the locking position, the retaining projections 43 are coupled in the orifices 64, making it difficult to remove the actuator element 20 from the connector 30.

The housing 60 of the lever 11, which is substantially parallelepiped-shaped in this embodiment, representing a case, comprises connector guides 65 which are a prolongation of the side walls 61 towards the outside of the housing 60 at a certain angle, in the direction opposite the direction for insertion of the connector 30 in the housing 60, the function therefore being to guide the connector 30 in its introduction into the housing 60.

In this embodiment, the fixing device 100 also comprises the casing 90, which is included in said fixing device 100 when the stress requirements on the actuator element 20 are significant, said casing 90 therefore being arranged between the end 21 on which it is supported and the upper wall 63 of the housing 60. The casing 90 allows there to be no metal-metal contact between the end 21 of the actuator element 20 and the upper wall 63 of the housing 60 having relative movement between one another, because said contact and relative movement generates noises. In other embodiments (not shown in the drawings) in which said requirements do not exist, the fixing device 100 does not comprise the casing 90, and the end 21 of the actuator element 20 is supported directly on the upper wall 63. The connector 30 comprises an upper wall 34 in the direction for insertion of the connector 30 in the housing 60 of the lever 11, coupled to the upper wall 63 of the housing 60 when the connector 30 is housed in the housing 60. The upper wall 34 comprises a circular opening 35 partially allowing passage of the end 21 of the actuator element 20, and the upper wall 63 in this embodiment is semispherical-shaped in the area arranged on the opening 35 of the upper wall 34 of the connector 30, the space 36 being formed in a space comprised between the retaining ends 42 of the retaining arms 41 and the upper wall 63 of the housing 60 in the semispherical-shaped area. In the embodiment of the device 100 of the invention shown in Figures 7a and 7b, said device 100 comprises the casing 90 arranged between the end 21 of the actuator element 20 and the upper wall 63 of the housing 60, the space 36 being formed between the retaining ends 42 of the retaining arms 41 and the casing 90.

The casing 90 is arranged such that it is supported on the end 21 of the actuator element 20 and in contact with the upper wall 63 of the housing 60 in the semispherical-shaped area when the end 21 is arranged in the space 36 in the locking position due to the pushing of the pressure arms 51 of the pressure means 50. The casing 90 is made of a material formed by POM, aramide and teflon, but it can also be made of steel with a teflon coating applied therein, in the area for support on the end 21 of the actuator element 20.

In this embodiment, the connector 30 comprises two partially circular supports 91 running along the opening 35 of the upper wall 34 inside the connector 30, said supports 91 being substantially parallel to the upper wall 34, leaving between both supports 91, at each end of the opening 35, two gaps allowing passage of the pressure ends 52 of the pressure arms 51. Said supports 91 allow supporting the casing 90 of the connector 30, because in this embodiment the semispherical casing 90 comprises a wing running along its base, and allows passage of the end 21 of the actuator element 20. The casing 90 is supported on the supports 91 when only the casing 90 and the connector 30 is mounted. The flanges 92 therefore allow retaining the casing 90 of the connector 30 supported on the supports 91 so that it does not fall off.

In this embodiment, the connector 30 also comprises two flanges 92 projecting from the upper wall 34 of the connector 30 towards the opening 35, partially occupying the area of said opening 35, but partially allowing passage of the end 21. When the end 21 of the actuator element 20 is in the locking position and the casing 90 is supported on said end 21, the flanges 92 are supported on the casing 90, but due to the pressure of the pressure arms 51 on the end 21, the flanges 92 give way and the casing 90 is no longer supported on the supports 91.

Though the pressure arms 51 of the pressure means 50 are less rigid than the retaining arms 41 of the retaining means 40, they are more rigid than the flanges 92 of the connector 30, so when the end 21 of the actuator element 20 is in the locking position, the flanges 92 give way to the pushing of said end 21 when it is pressed by the pressure arms 51. This difference in rigidity of the flanges 92 and pressure arms 51 is achieved by design, combining in each case different thicknesses, geometries and angles of forces of the arms.

In this embodiment, the connector 30 also comprises four protuberances 93 arranged projecting radially from the vertical wall coming down from the upper wall 34 of the connector 30 towards the supports 91 and towards the inside of the opening 35, partially occupying the area for supporting the casing 90 on the supports 91. The protuberances 93 allow centering the casing 90 in a centered position with respect to the end 21 of the actuator element 20 when the casing 90 is supported on the end 21, said end 21 being in the locking position.

In this embodiment, the connector 30 also comprises centering means 23, said centering means 23 comprising two centering arms 24 projecting from each of the pressure walls 32 of the connector 30 towards the outside of the connector 30, at a certain angle in the direction for insertion of the connector 30 in the housing 60 of the lever 11. The centering means 23 therefore allow guiding the end 21 of the actuator element 20 towards the inside of the connector 30 into the locking position.

With respect to mounting the actuator element 20 in the pedal 10, by means of the fixing device 100, the casing 90 is first mounted in the connector 30, said flanges retaining the casing 90, and then the previous sub-assembly is mounted in the housing 60, which is welded to the pedal 10 in this embodiment. Then the pedal 10 is mounted in the pedal support (not shown in the drawings), next the pedal support is mounted in the vehicle (not shown in the drawings), and the actuator element 20 is attached to the pedal support. This attachment consists of pushing the actuator element 20 in order to introduce it in the connector 30, i.e., the servo brake incorporating the actuator element 20 is mounted in the vehicle, the pedal support is mounted, and then the brake pedal 10 is pressed against the actuator element until it is clamped in the connector 30 in the locking position.

With respect to dismounting the actuator element 20 from the pedal 10, first the retaining projections 33 are pressed with the aid of a tool to release the connector 30 from the housing 60, and therefore from the pedal 10. Then the connector 30 is opened, manually for example, since the connector 30 has no stop or limit impeding it.

## Claims

1. Fixing device for fixing an actuator element (20) to a pedal (10) adapted to a motor vehicle, the pedal (10) comprising a lever (11) with an axis of rotation (12), and the actuator element (20) comprising an end (21), the actuator element (20) transmitting an actuation force applied on the lever (11) to an actuator, the fixing device (100) comprising a housing (60) fixed to the lever (11) and a connector (30) housed in the housing (60), the connector (30) comprising retaining means (40) retaining the end (21) of the actuator element (20) in a locking position, in a space (36) formed between the inside of the connector (30) and the housing (60), **characterized in that** the connector (30) comprises pressure means (50) interfering with the space (36), pressing the end (21) of the actuator element (20) in the locking position, and assuring permanent and rigid transmission of the actuation force between the end (21) of the actuator element (20) and the lever (11).

2. Fixing device according to claim 1, wherein the connector (30) is formed by a single part.

3. Fixing device according to claim 2, wherein the connector (30) is made integrally of plastic.

4. Fixing device according to any of claims 1 to 3, wherein the connector (30) is a piece comprising two retaining walls (31) substantially parallel to each other, the retaining means (40) comprising at least two retaining arms (41), at least one retaining arm (41) projecting from each retaining wall (31) towards the inside of the connector (30) at a certain angle in a direction for insertion of the connector (30) in the lever (11), each retaining arm (41) comprising a retaining end (42) at a free end.

5. Fixing device according to claim 4, wherein the connector (30) comprises two pressure walls (32), each pressure wall (32) being opposite each of the retaining walls (31), the pressure means (50) comprising at least two pressure arms (51), at least one pressure arm (51) projecting from each pressure wall (32) or from each retaining wall (31) towards the inside of the connector (30) at a certain angle in a direction for insertion of the connector (30) in the lever (11), each pressure arm (51) comprising a pressure end (52) at a free end.

6. Fixing device according to claim 5, wherein the end (21) of the actuator element (20) surpasses the position of the retaining ends (42), and at least half the height of the end (21), in the direction for insertion of the connector (30) in the lever (11), surpasses the position of the pressure ends (52) when the end (21) is in the locking position arranged in the space (36) formed between the inside of the connector (30) and the housing (60).

7. Fixing device according to claim 6, wherein the retaining arms (41) are more rigid than the pressure arms (51).

8. Fixing device according to any of claims 5 to 7, wherein the connector (30) comprises at least one outward fixing projection (33) in each of the retaining walls (31) coupled in retaining orifices (62) arranged in two side walls (61) of the housing (60) substantially parallel to each other and to the retaining walls (31), and a longitudinal play remover (70) comprising at least one elastic arm (71), the at least one elastic arm (71) interfering with an upper wall (63) of the housing (60) in the direction for insertion of the connector (30) in the lever (11), when said connector (30) is housed in the housing (60), pushing said at least one elastic arm (71) of the upper wall (63) and fitting the fixing projections (33) in the orifices (62) without play.

9. Fixing device according to claim 8, wherein the retaining arms (41) comprise a retaining projection (43) on their outer face, and each of the side walls (61) of the housing (60) comprises an orifice (64), the retaining projections (43) being suitable for being coupled in the orifices (64) when the retaining arms (41) open.

10. Fixing device according to claim 8 or 9, wherein the housing (60) of the lever (11) comprises connector guides (65) which are a prolongation of the side walls (61) towards the outside of the housing (60) at a certain angle, in the direction opposite the direction for insertion of the connector (30) in the housing (60) of the lever (11).

11. Fixing device according to any of claims 8 to 10, wherein the connector (30) comprises a lateral play remover (80) comprising at least one projection (81) in each of the retaining walls (31), the at least one projection (81) interfering with the side wall (61) of the housing (60), when the connector (30) is housed in the housing (60), pushing said at least one projection (81) of the side wall (61).

12. Fixing device according to any of claims 8 to 11, comprising a casing (90), the connector (30) comprising an upper wall (34) in the direction for insertion of the connector (30) in the housing (60) of the lever (11), which is coupled to the upper wall (63) of the housing (60), the upper wall (34) comprising an opening (35) partially allowing passage of the end (21) of the actuator element (20), the space (36) between the retaining ends (42) of the retaining arms (41) and the upper wall (63) of the housing (60) being formed, the casing (90) being arranged such that it is supported on the end (21) of the actuator element (20) and in contact with the upper wall (63) of the housing (60) when the end (21) is arranged in the space (36) in the locking position.

13. Fixing device according to claim 12, wherein the connector (30) comprises at least one support (91) running at least partially along the opening (35) of the upper wall (34) of the connector (30), said at least one support (91) allowing the support of the casing (90) of the connector (30), and allowing passage of the end (21) of the actuator element (20), the connector (30) comprising at least one flange (92) projecting from the upper wall (34) of the connector (30) towards the opening (35), said at least one flange (92) allowing retaining the casing (90) of the connector (30) supported on the at least one support (91) when the end (21) is not arranged inside the connector (30) in the locking position, and the connector (30) comprising at least one protuberance (93) arranged projecting towards the inside of the opening (35) and on the at least one support (91), allowing said at least one protuberance (93) to center the casing (90) in a centered position with respect to the end (21) of the actuator element (20), the pressure arms (51) being more rigid than the at least one flange (92) of the connector (30).

14. Fixing device according to any of claims 5 to 13, wherein the connector (30) comprises centering means (23), said centering means (23) comprising two centering arms (24), each of the centering arms (24) projecting from each of the pressure walls (32) of the connector (30) towards the outside of the connector (30) at a certain angle in a direction for insertion of the connector (30) in the lever (11), the centering means (23) allowing the guiding of the end (21) of the actuator element (20) towards the inside of the connector (30) to the locking position.

15. Pedal for motor vehicles, **characterized in that** it comprises a fixing device (100) according to any of the preceding claims.

## Patentansprüche

1. Befestigungsvorrichtung zur Befestigung eines Aktorelements (20) auf einem einem Kfz angepassten Pedal (10), wobei das Pedal (10) einen Hebel (11) mit einer Rotationsachse (12) umfasst, und wobei das Aktorelement (20) ein Ende (21) umfasst, wobei das Aktorelement (20) eine auf den Hebel (11) angewendete Antriebskraft auf einen Aktor überträgt, wobei die Befestigungsvorrichtung (100) ein auf dem Hebel (11) befestigtes Gehäuse (60) und ein im Gehäuse (60) enthaltenes Verbindungselement (30) umfasst, wobei das Verbindungselement (30) Haltemittel (40), die das Ende (21) des Aktorelements (20) in einer verriegelten Position in einem zwischen der Innenseite des Verbindungselements (30) und dem Gehäuse (60) gebildeten Raum (36) halten, umfasst, **dadurch gekennzeichnet, dass** das Verbindungselement (30) Druckmittel (50) umfasst, die den Raum (36) stören und das Ende (21) des Aktorelements (20) in die verriegelte Position drücken und eine permanente, steife Übertragung der Antriebskraft zwischen dem Ende (21) des Aktorelements (20) und dem Hebel (11) gewährleisten.

2. Vorrichtung nach Anspruch 1, wobei das Verbindungselement (30) einstückig ausgebildet ist.

3. Vorrichtung nach Anspruch 2, wobei das Verbindungselement (30) integral aus Kunststoff besteht.

4. Vorrichtung nach einem der Ansprüche 1 - 3, wobei das Verbindungselement (30) ein Stück ist, das zwei im Wesentlichen parallel zueinander angeordnete Stützwände (31) umfasst, wobei die Haltemittel (40) mindestens zwei Haltearme (41) umfassen, wobei mindestens ein Haltearm (41) aus jeder Stützwand (31) in Richtung des Inneren des Verbindungselements (30) in einem bestimmten Winkel in einer Richtung zur Einführung des Verbindungselements (30) in den Hebel (11) hervorstehen, wobei jeder Haltearm (41) ein Halteende (42) an einem freien Ende umfasst.

5. Vorrichtung nach Anspruch 4, wobei das Verbindungselement (30) zwei Druckwände (32) umfasst, wobei jede Druckwand (32) jeder der Stützwände (31) gegenübersteht, wobei die Druckmittel (50) mindestens zwei Druckarme (51) umfassen, wobei mindestens ein Druckarm (51) aus jeder Druckwand (32) oder aus jeder Stützwand (31) in Richtung des Inneren des Verbindungselements (30) in einem bestimmten Winkel in einer Richtung zur Einführung des Verbindungselements (30) in den Hebel (11) hervorstehen, wobei jeder Druckarm (51) ein Druckende (52) und ein freies Ende umfasst.

6. Vorrichtung nach Anspruch 5, wobei das Ende (21) des Aktorelements (20) über die Position der Halteenden (42) hinausgeht und mindestens die halbe Höhe des Endes (21) in der Einführungsrichtung des Verbindungselements (30) in den Hebel (11) über die Position der Druckenden (52) hinausgeht, wenn sich das Ende (21) in der verriegelten Position im zwischen dem Inneren des Verbindungselements (30) und dem Gehäuse (60) ausgebildeten Raum (36) befindet.

7. Vorrichtung nach Anspruch 6, wobei die Haltearme (41) steifer sind als die Druckarme (51).

8. Vorrichtung nach einem der Ansprüche 5 - 7, wobei das Verbindungselement (30) mindestens einen nach außen gerichteten Befestigungsvorsprung (33) in jeder der Stützwände (31), die in Halteöffnungen (62) in zwei Seitenwänden (61) des Gehäuses (60) gekoppelt sind, wobei die Seitenwände (61) im Wesentlichen parallel zueinander and zu den Stützwänden (31) angeordnet sind, und einen Längsspielentferner (70), der mindestens einen elastischen Arm (71) umfasst, umfasst, wobei der mindestens eine elastische Arm (71) eine Oberwand (63) des Gehäuses (63) in der Einführungsrichtung des Verbindungselements (30) in den Hebel (11) stört, wenn das Verbindungselement (30) im Gehäuse (60) enthalten ist, und den mindestens einen elastischen Arm (71) der Oberwand (63) drückt und die Befestigungsvorsprünge (33) ohne Spielraum in die Öffnungen (62) hineinpasst.

9. Vorrichtung nach Anspruch 8, wobei die Haltearme (41) einen Haltevorsprung (43) auf ihrer Außenfläche umfassen und jede der Seitenwände (61) des Gehäuses (60) eine Öffnung (64) umfasst, wobei die Haltevorsprünge (43) geeignet sind, sich in den Öffnungen (64) zu koppeln, wenn sich die Haltearme (41) öffnen.

10. Vorrichtung nach Anspruch 8 oder 9, wobei das Gehäuse (60) des Hebels (11) Verbinderführungen (65) umfasst, die eine Verlängerung der Seitenwände (61) in Richtung der Außenseite des Gehäuses (60) in einem bestimmten Winkel in einer der Einführungsrichtung des Verbindungselements (30) ins Gehäuse (60) des Hebels (11) entgegengesetzten Richtung sind.

11. Vorrichtung nach einem der Ansprüche 8 - 10, wobei das Verbindungselement (30) ein Seitenspielentferner (80) umfasst, der mindestens einen Vorsprung (81) in jeder der Stützwände (31) umfasst, wobei der mindestens eine Vorsprung (81) die Seitenwand (61) des Gehäuses (60) stört, wenn das Verbindungselement (30) im Gehäuse (60) enthalten ist, und den mindestens einen Vorsprung (81) der Seitenwand (61) drückt.

12. Vorrichtung nach einem der Ansprüche 8 - 11, umfassend eine Hülle (90), wobei das Verbindungselement (30) eine Oberwand (34) in der Einführungsrichtung des Verbindungselements (30) ins Gehäuse (60) des Hebels (11) umfasst, die mit der Oberwand (63) des Gehäuses (60) gekoppelt ist, wobei die Oberwand (34) eine Öffnung (35), die den Durchgang des Endes (21) des Aktorelements (20) teilweise zulässt, umfasst, wobei der Raum (36) zwischen den Halteenden (42) der Haltearme (41) und der Oberwand (63) des Gehäuses (60) gebildet wird, wobei die Hülle (90) derart angeordnet ist, dass sie auf dem Ende (21) des Aktorelements (20) getragen wird und sich mit der Oberwand (63) des Gehäuses (60) in Kontakt befindet, wenn das Ende (21) in der verriegelten Position im Raum (36) angeordnet ist.

13. Vorrichtung nach Anspruch 12, wobei das Verbindungselement (30) mindestens eine Stütze (91), die mindestens teilweise entlang der Öffnung (35) der Oberwand (34) des Verbindungselements (30) verläuft, umfasst, wobei die mindestens eine Stütze (91) die Abstützung der Hülle (90) des Verbindungselements (30) ermöglicht, und den Durchgang des Endes (21) des Aktorelements (20) ermöglicht, wobei das Verbindungselement (30) mindestens einen aus der Oberwand (34) des Verbindungselements (30) in Richtung der Öffnung (35) hervorstehenden Flansch (92) umfasst, wobei der mindestens eine Flansch (92) das Zurückhalten der Hülle (90) des auf der mindestens einen Stütze (91) getragenen Verbindungselements (30) ermöglicht, wenn das Ende (21) nicht im Inneren des Verbindungselements (30) in der verriegelten Position angeordnet ist, und wobei das Verbindungselement (30) einen Vorsprung (93) umfasst, der in Richtung des Inneren der Öffnung (35) auf der mindestens einen Stütze (91) hervorstehend angeordnet ist, was es dem mindestens einen Vorsprung (93) ermöglicht, die Hülle (90) in einer zentrierten Position relativ zum Ende (21) des Aktorelements (20) zu zentrieren, wobei die Druckarme (51) steifer sind als der mindestens eine Flansch (92) des Verbindungselements (30).

14. Vorrichtung nach einem der Ansprüche 5 - 13, wobei das Verbindungselement (30) Zentriermittel (23) umfasst, wobei die Zentriermittel (23) zwei Zentrierarme (24) umfasst, wobei jeder der Zentrierarme (24) aus jeder der Druckwände (32) des Verbindungselements (30) in Richtung der Außenseite des Verbindungselements (30) in einem bestimmten Winkel in einer Einführungsrichtung des Verbindungselements (30) in den Hebel (11) hervorsteht, wobei dei Zentriermittel (23) die Führung des Endes (21) des Aktorelements (20) in Richtung des Inneren des Verbindungselements (30) in die verriegelte Position ermöglichen.

15. Pedal für Kfz, **dadurch gekennzeichnet, dass** e seine Vorrichtung (100) nach einem der vorstehenden Ansprüche umfasst.

## Revendications

1. Dispositif de fixation pour fixer un élément d'actionneur (20) sur une pédale (10) adaptée sur un véhicule à moteur, la pédale (10) comprenant un levier (11) avec un axe de rotation (12), et l'élément d'actionneur (20) comprenant une extrémité (21), l'élément d'actionneur (20) transmettant une force d'actionnement appliquée sur le levier (11) à un actionneur, le dispositif de fixation (100) comprenant un logement (60) fixé sur le levier (11) et un connecteur (30) logé dans le logement (60), le connecteur (30) comprenant des moyens de retenue (40) retenant l'extrémité (21) de l'élément d'actionneur (20) dans une position de verrouillage, dans un espace (36) formé entre l'intérieur du connecteur (30) et le logement (60), **caractérisé en ce que** le connecteur (30) comprend des moyens de pression (50) interférant avec l'espace (36), comprimant l'extrémité (21) de l'élément d'actionneur (20) dans la position de verrouillage, et garantissant la transmission permanente et rigide de la force d'actionnement entre l'extrémité (21) de l'élément d'actionneur (20) et le levier (11).

2. Dispositif de fixation selon la revendication 1, dans lequel le connecteur (30) est formé par une partie unique.

3. Dispositif de fixation selon la revendication 2, dans lequel le connecteur (30) est réalisé de manière solidaire avec du plastique.

4. Dispositif de fixation selon l'une quelconque des revendications 1 à 3, dans lequel le connecteur (30) est une pièce comprenant deux parois de retenue (31) sensiblement parallèles entre elles, les moyens de retenue (40) comprenant au moins deux bras de retenue (41), au moins un bras de retenue (41) faisant saillie à partir de chaque paroi de retenue (31) vers l'intérieur du connecteur (30) à un certain angle dans une direction d'insertion du connecteur (30) dans le levier (11), chaque bras de retenue (41) comprenant une extrémité de retenue (42) au niveau d'une extrémité libre.

5. Dispositif de fixation selon la revendication 4, dans lequel le connecteur (30) comprend deux parois de pression (32), chaque paroi de pression (32) étant opposée à chacune des parois de retenue (31), les moyens de pression (50) comprenant au moins deux bras de pression (51), au moins un bras de pression (51) faisant saillie de chaque paroi de pression (32) ou de chaque paroi de retenue (31) vers l'intérieur du connecteur (30) à un certain angle dans une direction d'insertion du connecteur (30) dans le levier (11), chaque bras de pression (51) comprenant une extrémité de pression (52) au niveau d'une extrémité libre.

6. Dispositif de fixation selon la revendication 5, dans lequel l'extrémité (21) de l'élément d'actionneur (20) dépasse la position des extrémités de retenue (42), et au moins la moitié de la hauteur de l'extrémité (21), dans la direction d'insertion du connecteur (30) dans le levier (11), dépasse la position des extrémités de pression (52) lorsque l'extrémité (21) est dans la position de verrouillage agencée dans l'espace (36) formé entre l'intérieur du connecteur (30) et le logement (60).

7. Dispositif de fixation selon la revendication 6, dans lequel les bras de retenue (41) sont plus rigides que les bras de pression (51).

8. Dispositif de fixation selon l'une quelconque des revendications 5 à 7, dans lequel le connecteur (30) comprend au moins une saillie de fixation vers l'extérieur (33) dans chacune des parois de retenue (31) couplées dans les orifices de retenue (62) agencés dans deux parois latérales (61) du logement (60) sensiblement parallèlement entre elles et aux parois de retenue (31), et un dispositif de suppression de jeu longitudinal (70) comprenant au moins un bras élastique (71), le au moins un bras élastique (71) interférant avec une paroi supérieure (63) du logement (60) dans la direction d'insertion du connecteur (30) dans le levier (11), lorsque ledit connecteur (30) est logé dans le logement (60), poussant ledit au moins un bras élastique (71) de la paroi supérieure (63) et montant les saillies de fixation (33) dans les orifices (62) sans jeu.

9. Dispositif de fixation selon la revendication 8, dans lequel les bras de retenue (41) comprennent une saillie de retenue (43) sur leur face externe, et chacune des parois latérales (61) du logement (60) comprend un orifice (64), les saillies de retenue (43) étant appropriées pour être couplées dans les orifices (64) lorsque les bras de retenue (41) s'ouvrent.

10. Dispositif de fixation selon la revendication 8 ou 9, dans lequel le logement (60) du levier (11) comprend des guides de connecteur (65) qui sont un prolongement des parois latérales (61) vers l'extérieur du logement (60) à un certain angle, dans la direction opposée à la direction d'insertion du connecteur (30) dans le logement (60) du levier (11).

11. Dispositif de fixation selon l'une quelconque des revendications 8 à 10, dans lequel le connecteur (30) comprend un dispositif de suppression de jeu latéral (80) comprenant au moins une saillie (81) dans chacune des parois de retenue (31), la au moins une saillie (81) interférant avec la paroi latérale (61) du logement (60), lorsque le connecteur (30) est logé dans le logement (60), poussant ladite au moins une saillie (81) de la paroi latérale (61).

12. Dispositif de fixation selon l'une quelconque des revendications 8 à 11, comprenant un boîtier (90), le connecteur (30) comprenant une paroi supérieure (34) dans la direction d'insertion du connecteur (30) dans le logement (60) du levier (11), qui est couplé à la paroi supérieure (63) du logement (60), la paroi supérieure (34) comprenant une ouverture (35) permettant partiellement le passage de l'extrémité (21) de l'élément d'actionneur (20), l'espace (36) entre les extrémités de retenue (42) des bras de retenue (41) et la paroi supérieure (63) du logement (60) étant formé, le boîtier (90) étant agencé de sorte qu'il est supporté sur l'extrémité (21) de l'élément d'actionneur (20) et en contact avec la paroi supérieure (63) du logement (60) lorsque l'extrémité (21) est agencée dans l'espace (36) dans la position de verrouillage.

13. Dispositif de fixation selon la revendication 12, dans lequel le connecteur (30) comprend au moins un support (91) s'étendant au moins partiellement le long de l'ouverture (35) de la paroi supérieure (34) du connecteur (30), ledit au moins un support (91) permettant le support du boîtier (90) du connecteur (30) et permettant le passage de l'extrémité (21) de l'élément d'actionneur (20), le connecteur (30) comprenant au moins une bride (92) faisant saillie de la paroi supérieure (34) du connecteur (30) vers l'ouverture (35), ladite au moins une bride (92) permettant de retenir le boîtier (90) du connecteur (30) supporté sur le au moins un support (91) lorsque l'extrémité (21) n'est pas agencée à l'intérieur du connecteur (30) dans la position de verrouillage, et le connecteur (30) comprenant au moins une protubérance (93) agencée en saillie vers l'intérieur de l'ouverture (35) et sur le au moins un support (91), permettant à ladite au moins une protubérance (93) de centrer le boîtier (90) dans une position centrée par rapport à l'extrémité (21) de l'élément d'actionneur (20), les bras de pression (51) étant plus rigides que la au moins une bride (92) du connecteur (30).

14. Dispositif de fixation selon l'une quelconque des revendications 5 à 13, dans lequel le connecteur (30) comprend des moyens de centrage (23), lesdits moyens de centrage (23) comprenant deux bras de centrage (24), chacun des bras de centrage (24) faisant saillie de chacune des parois de pression (32) du connecteur (30) vers l'extérieur du connecteur (30) à un certain angle dans une direction du connecteur (30) dans le levier (11), les moyens de centrage (23) permettant le guidage de l'extrémité (21) de l'élément d'actionneur (20) vers l'intérieur du connecteur (30) dans la position de verrouillage.

15. Pédale pour véhicules à moteur, **caractérisée en ce qu**'elle comprend un dispositif de fixation (100) selon l'une quelconque des revendications précédentes.
